# EUROPÄISCHE PATENTSCHRIFT

(11) **EP 2 551 603 B1**
(45) Veröffentlichungstag und Bekanntmachung des Hinweises auf die Patenterteilung: **28.08.2019**
(21) Anmeldenummer: 12172311.8
(22) Anmeldetag: 15.06.2012
(51) Int. Cl.: F24D 5/04, F24H 3/08, F24H 8/00

(54) **Deckenhallenheizsystem mit Brennwerttechnik**
Hall heating with calorific technology
Système de chauffage de salle avec technique de valeur de combustion

(30) Priorität: 28.07.2011 DE 102011052267
(43) Veröffentlichungstag der Anmeldung: 30.01.2013
(73) Patentinhaber: LK Metallwaren GmbH, 91126 Schwabach (DE)
(72) Erfinder: Hintze, Karlheinz, 90451 Nürnberg (DE)
(74) Vertreter: Lang, Christian

(56) Entgegenhaltungen:
- WO-A2-2009/095944
- DE-A1- 19 513 833
- FR-A- 1 124 379
- GB-A- 2 402 465

## Beschreibung

### HINTERGRUND DER ERFINDUNG

### GEBIET DER ERFINDUNG

Die vorliegende Erfindung betrifft ein an der Decke befestigbares, direkt beheiztes Hallenheizsystem, insbesondere eines nach dem Oberbegriff des Anspruchs 1.

### STAND DER TECHNIK

Für die Heizung von großen Hallen werden meist Warmluft-Heizluftsysteme eingesetzt, die mittels eines Warmluftstroms große Räume, wie Produktions- oder Montagehallen, schnell und effizient beheizen können. Bei derartigen Heizsystemen wird somit die Wärmeverteilung und -übertragung in dem zu beheizenden Raum durch einen erzeugten Warmluftstrom bewirkt, während bei anderen Systemen, wie Fußboden- oder Wandheizungen, andere Wärme-übertragungsmechanismen, wie Wärmestrahlung und dergleichen, im Vordergrund stehen können.

Bei den Warmluftheizgeräten kann zwischen direkt beheizten Warmlufterzeugern und indirekt beheizten Warmlufterzeugern unterschieden werden. Bei direkt beheizten Warmlufterzeugern ist unmittelbar an dem Warmlufterzeuger ein Brenner vorgesehen, der durch Verbrennung eines Brennstoffs die Wärme direkt erzeugt. Indirekte Warmlufterzeuger nutzen hingegen die Abwärme von einem Heizmedium, um einen Warmluftstrom mittels eines Wärmetauschers zu erzeugen, wobei das Heizmedium durch eine entfernt angeordnete Heizzentrale erwärmt werden kann. Indirekte Luftheizgeräte können beispielsweise in Kombination mit einer Warmwasserheizung betrieben werden, erreichen jedoch aufgrund der mehrfachen Wärmeübertragung nicht die Effizienz eines direkt beheizten Raumlufterzeugers. Darüber hinaus können direkt beheizte Warmlufterzeuger unabhängig von einer Heizzentrale und eines Heizkreislaufes überall an geeigneten Stellen in einem entsprechenden zu beheizenden Raum, wie einer Halle, angeordnet werden.

Für Hallenheizsysteme gibt es weiterhin grundsätzlich drei verschiedene Anbringungsmöglichkeiten, nämlich am Boden befindliche Systeme, an den Wänden befestigte Systeme und an den Decken angebrachte Systeme. Dabei ist die Befestigung an der Decke am vorteilhaftesten, da dadurch die beste Luftzirkulation erreicht und damit ein optimales Raumklima gewährleistet wird.

Des Weiteren gibt es zwei Möglichkeiten der Wärmeabgabe von Warmlufterzeugern. Einerseits kann die Wärmeabgabe unmittelbar an beziehungsweise nahe bei der Heizvorrichtung (Brenner) erfolgen, andererseits kann die Wärmeabgabe mit geeigneten Wärmetauschern über einen größeren Bereich und hauptsächlich entfernt von der Heizvorrichtung erfolgen. Ersteres führt aufgrund der Wärmeabgabe und gleichzeitiger Luftansaugung in einem zur Raumgröße relativ kleinen Bereich zu einer Verschlechterung der Luftzirkulation, ist allerdings konstruktiv einfacher zu realisieren. Letzteres bewirkt eine bessere Luftzirkulation und damit ein besseres Raumklima, erfordert allerdings eine aufwändigere Konstruktion.

Somit ergibt sich das beste Raumklima bei einer Heizung mit einem an der Decke angebrachten Heizsystem mit direkt beheiztem Warmlufterzeuger, das mittels eines über einen weiten Bereich sich erstreckenden Wärmetauschers die Wärme über einen großen Raum verteilt. Ein solches Heizsystem ist aus der deutschen Patentschrift DE 1 218 688 bekannt.

Das in der DE 1 218 688 beschriebene Heizsystem, das in den Figuren 1 und 2 dargestellt ist, weist eine Brennkammer 3 auf, in deren einen Wand 4 ein Brenner 10 angeordnet ist. Gegenüber dem Brenner ist ein Saugzuggebläse 5 vorgesehen, welches mit einem Abgasstutzen 6 verbunden ist. Die Brennkammer 3 ist mit einer Verlängerung versehen, an die zwei Verbrennungsgaskanalsysteme angeschlossen sind, wobei diese beiderseits der Verlängerung der Brennkammer 3 abzweigen und sich in entgegengesetzten Richtungen erstrecken. Die Verbrennungsgaskanalsysteme bilden an ihren Enden einen Bogen und laufen von diesem zurück und münden in einen gemeinsamen Absaugkanal 9, der sich oberhalb der Verlängerung der Brennkammer zum Saugzuggebläse 5 hin erstreckt.

Von beiden Seiten der Brennkammer 3 und parallel zu dieser erstreckt sich weiterhin eine Luftkammer 7 mit je einem darin angeordneten Ventilator zum Fördern der Luft, die als Warmluft in den zu beheizenden Raum abgegeben werden soll. Die zu erwärmende Luft wird in den Luftkammern 7 entlang der Brennkammer 3 bewegt, um die Brennkammer 3 zu kühlen und von der Brennkammer entsprechende Wärme aufzunehmen. Die Lufteinlasskammern 7 setzen sich in je einen rohrförmigen Bauteil fort, das die zugehörigen Verbrennungsgaskanalschlaufen gehäuseförmig umgibt und an den äußeren Enden mit abwärts gerichteten Ausblasstutzen versehen ist, welche die entlang der Verbrennungsgaskanalschlaufen erwärmte Luft abwärts gerichtet an den zu beheizenden Raum abgeben. Luftaustrittsöffnungen sind mit Jalousien 22 versehen.

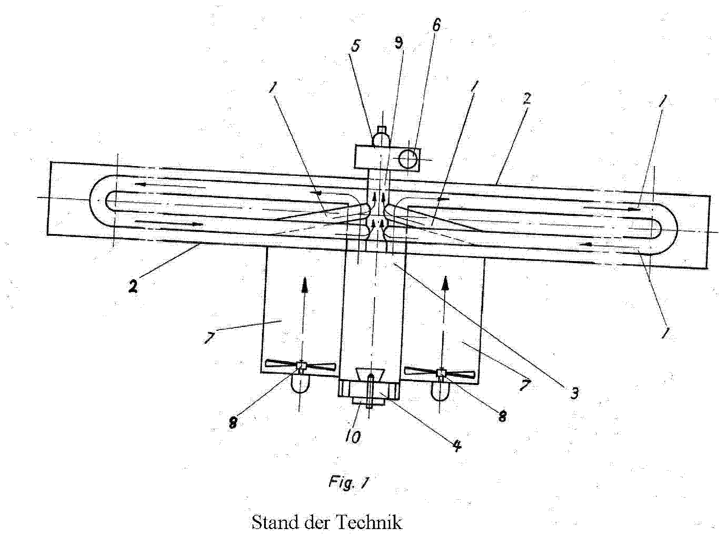

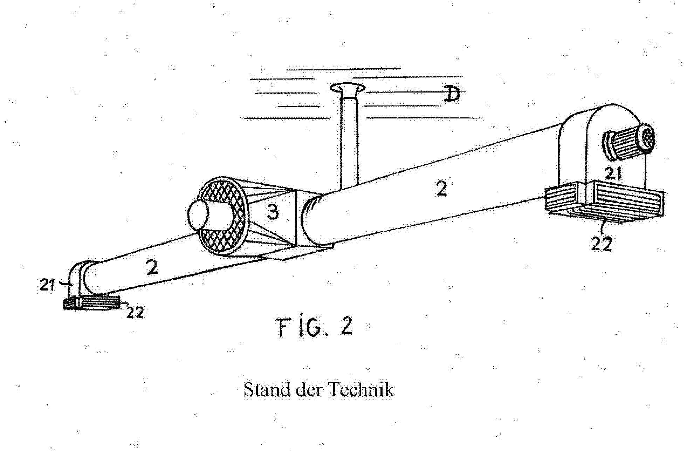

Das Heizsystem weist somit, wie in Fig. 1 und 2 gezeigt, einen ersten Luftstrom auf, der in dem Brenner 3 mit Brennstoff verbrannt wird und als Abgas durch lange, U-förmige Abgaskanalrohre geführt wird, wobei er den zweiten Luftstrom erwärmt und selber abkühlt, um anschließend über einen Abgasauslass 6 das Gebäude zu verlassen. Der zweite Luftstrom verläuft neben beziehungsweise um die Brennkammer 3 herum, in einer rohrförmigen Ummantelung an den Abgaskanalrohren entlang hin zu den Ausblasstutzen 21, die mit in geeignete Richtungen weisenden, verschließbaren Öffnungen versehen sind. Dadurch dass die Ansaugöffnung für die zu erwärmende Raumluft und die Ausblasstutzen 21 für die erwärmte Luft weit genug auseinander liegen und das Ausblasen der erwärmten Luft in frei wählbare Richtungen erfolgen kann, ist eine gute Beheizung des Raumes mit einem guten Raumklima und einer vorteilhaften Luftzirkulation erzielbar.

Obwohl die Heizvorrichtung der DE 1 218 688 vorteilhafte Heizergebnisse für die Beheizung von großen Räumen oder Hallen gewährleistet, besteht aufgrund knapper werdender Ressourcen und höherer Umweltschutzanforderungen der Bedarf, die Effizienz der bekannten, direkt beheizten Warmlufterzeuger zu erhöhen.

Aus der Veröffentlichung WO 2009/095944 A2, die einen Warmlufterzeuger gemäß dem Oberbegriff des Anspruchs 1 offenbart, ist eine Heizvorrichtung bekannt, bei welcher eine Brennkammer und ein Wärmetauscher in voneinander getrennten Teilräumen der Heizvorrichtung angeordnet sind, beiden Teilräumen durch Gebläse die zu erhitzende Umgebungsluft zugeführt wird und die so erhitzte Luft nach Durchströmen der Teilräume wieder zusammengeführt wird.

Aus der Veröffentlichung der Patentanmeldung DE 19513833 A1 ist eine Strahlungsheizung bekannt, deren Abgasleitung in einer mit zu erwärmender Luft durchströmten Rohrleitung angeordnet ist, sodass die Restwärme des Abgases als Wärmequelle einer Lüfterheizung verwendet wird.

### OFFENBARUNG DER ERFINDUNG

### AUFGABE DER ERFINDUNG

Aufgabe der vorliegenden Erfindung ist somit die Bereitstellung eines direkt beheizten Warmlufterzeugers, der die Vorteile einer Deckenanbringung und einer großflächigeren Wärmeabgabe mit hohem Wirkungsgrad verbindet, um eine gute Luftzirkulation, ein angenehmes Raumklima und eine schnelle und effiziente Beheizung zu ermöglichen.

### TECHNISCHE LÖSUNG

Diese Aufgabe wird gelöst durch einen direkt beheizten Warmlufterzeuger mit den Merkmalen des Anspruchs 1. Vorteilhafte Ausführungsformen sind Gegenstand der abhängigen Ansprüche.

Die Erfindung geht aus von einem direkt beheizten Warmlufterzeuger, wie er in der DE 1 218 688 beschrieben ist. Entsprechend ist die Grundgestaltung mit Brennkammer, Luftansaugung, Wärmetauscher mit U-förmigen Abgasrohren und rohrförmiger Umhüllung auch für die vorliegende Erfindung einsetzbar. Zur Effizienzsteigerung wird der Warmlufterzeuger gemäß der vorliegenden Erfindung jedoch so weiter gebildet, dass die sogenannte Brennwerttechnologie verwirklicht wird, welche die Wärme des Abgases möglichst vollständig nutzen will, und zwar einschließlich der Kondensationswärme, die durch Bildung eines Kondensats aus dem Abgas entsteht. Obwohl die Brennwerttechnik bereits seit einiger Zeit im Zusammenhang mit Heizsystemen bekannt ist, ist eine Verwirklichung der Brennwerttechnologie mit einem Warmlufterzeuger, wie er in der DE 1 218 688 beschrieben ist, nicht für möglich gehalten worden, da die räumlich ausgedehnte Verteilung der Warmluft über die Wärmetauscher von Haus aus eine hohe Abgastemperatur erfordert, so dass eine entsprechend weite Absenkung der Abgastemperatur sinnvoll nicht möglich erschien.

Die Erfinder zeigen mit der vorliegenden Erfindung jedoch einen Weg auf, wie mit einfachen konstruktiven Mitteln eine entsprechende Effizienzsteigerung möglich ist. Hierzu wird vorgeschlagen, den Heizluftkanal, der zur Wärmeübertragung von der Brennkammer und vom Abgas auf die zu erwärmende Heizluft entlang der Abgasrohre und entlang der Brennkammer beispielsweise in Form eines umhüllenden Gehäuses oder Rohrs geführt ist, mindestens in einem Teilbereich so zu unterteilen, dass Heizluftteilkanäle entstehen, in denen Heizluftanteile mit unterschiedlichen Temperaturen vorhanden sind, so dass ein Heizluftanteil mit niedrigerer Temperatur so geführt werden kann, dass er auf einen Endbereich eines Abgasrohres trifft, um die Abgastemperatur weiter abzusenken und insbesondere unterhalb die Kondensationstemperatur zu drücken.

Insbesondere kann die Unterteilung des Heizluftkanals in einen ersten Heizluftteilkanal und einen zweiten Heizluftteilkanal im Bereich der Brennkammer vorgesehen sein, so dass ein Teil der zu erwärmenden Heizluft beabstandet von der Brennkammer quasi an dieser vorbeigeführt wird, um die Wärme des bereits weitgehend abgekühlten Abgases in einem Endbereich des Abgasrohrs aufzunehmen. Entsprechend kann der Heizluftkanal so ausgebildet sein, dass einer der Heizluftteilkanäle in einen Bereich des Heizluftkanals am Ende eines Abgasrohrs mündet, also quasi kurzgeschlossen ist oder einen By-pass bildet.

Im Bereich der Heizluftteilkanäle kann eine Verschluss- und/oder Verstelleinrichtung zur Aufteilung der Heizluftanteile in den Heizluftteilkanälen vorgesehen sein, die insbesondere mechanisch einstellbar und/oder thermisch regelbar ist. Bei der thermischen Regelung kann somit der Anteil der wenig vorgewärmten Heizluft zur weiteren Abkühlung der Abgastemperatur von der gemessenen Abgastemperatur abhängig gemacht werden und über eine Steuerung bzw. Regelung im gewünschten Bereich eingestellt werden.

Da entsprechend bei einem derart ausgebildeten Warmlufterzeuger eine Kondensation im Abgas stattfinden kann, kann der Warmlufterzeuger mit einem Kondensatablauf versehen sein und die Abgasrohre können zur Horizontalen geneigt ausgeführt sein, insbesondere in Strömungsrichtung des Abgases leicht fallend ausgebildet sein, um einen Ablauf des Kondensats zu ermöglichen. Der Kondensatablauf kann auch eine Pumpe zum Abpumpen des Kondensats umfassen, um das Kondensat insbesondere automatisiert abpumpen zu können.

Um eine weitere Steigerung der Effizienz des Warmlufterzeugers zu erzielen, kann die Zuluft zu dem Brenner im Gegenstrom zum Abgasauslass geführt sein, so dass die restliche Wärme des Abgases für die Vorwärmung der Zuluft für den Brenner genutzt werden kann.

### KURZBESCHREIBUNG DER FIGUREN

Die beigefügten Zeichnungen zeigen in rein schematischer Weise in
- Figur 1: eine schematische Draufsicht auf ein Hallenheizsystem nach Stand der Technik;
- Figur 2: eine perspektivische Ansicht eines Hallenheizsystems nach Stand der Technik; und in
- Figur 3: eine Schnittdarstellung eines erfindungsgemäßen Ausführungsbeispiels; und in
- Figur 4: eine perspektivische Darstellung von Teilen des Ausführungsbeispiels aus Fig. 3.

### AUFÜHRUNGSBEISPIEL

Weitere Vorteile, Kennzeichen und Merkmale der vorliegenden Erfindung werden bei der nachfolgenden detaillierten Beschreibung eines Ausführungsbeispiels deutlich. Allerdings ist die Erfindung nicht auf dieses Ausführungsbeispiel beschränkt.

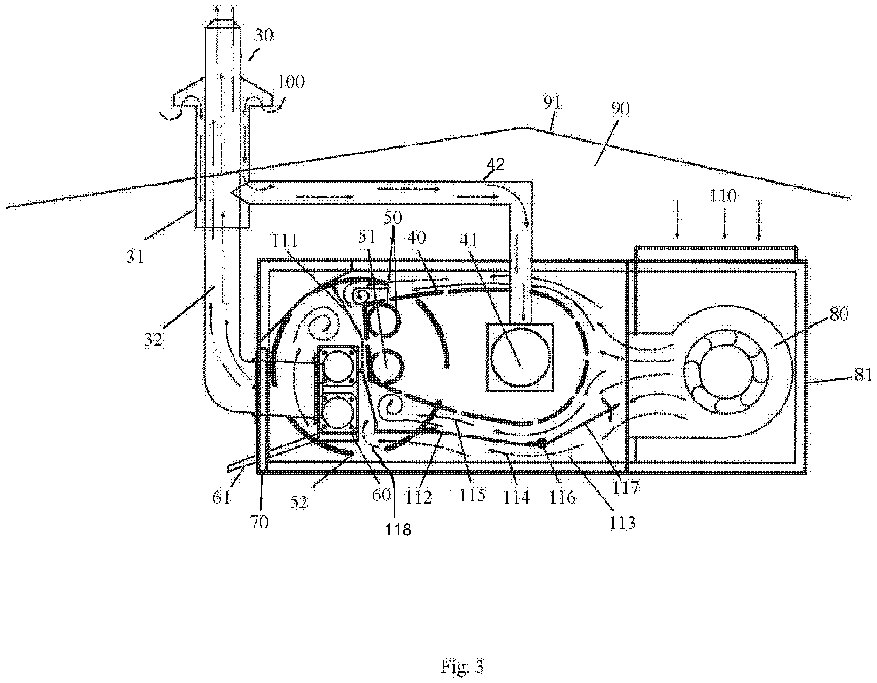

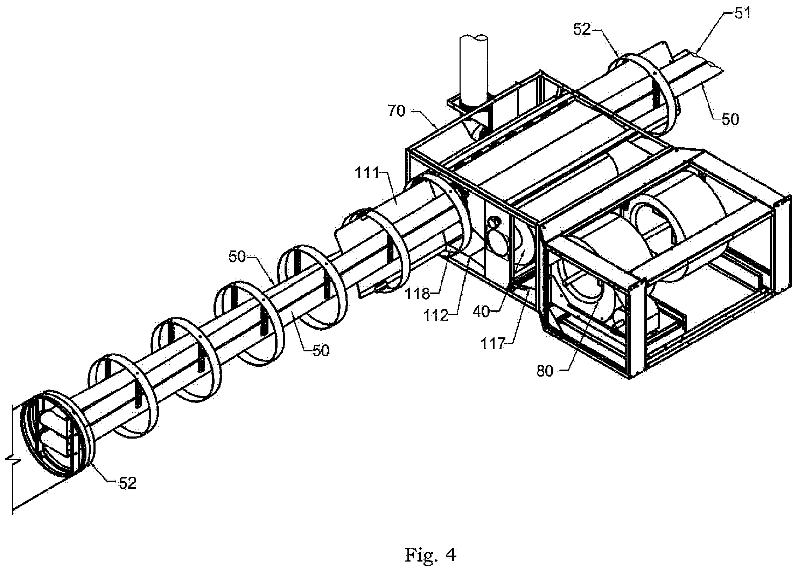

Wie aus den Fig. 3 und Fig. 4 ersichtlich ist, umfasst ein erfindungsgemäßes Hallenheizsystem einen Ventilator oder ein Gebläse 80 in einer Luftansaugvorrichtung 81 für die Zufuhr von Raumluft und ein mit der Luftansaugvorrichtung 81 verbundenes Gehäuse 70, welches eine Brennkammer 40 beinhaltet. In der Brennkammer 40 ist ein Öl- oder Gasbrenner 41 angeordnet, der mit einem Zuluftkanal 42 verbunden ist. Des Weiteren ist eine Zuführleitung für Brennstoff, wie beispielsweise Erdöl oder Erdgas, vorgesehen, die in den Abbildungen der Figuren 3 und 4 nicht gezeigt ist. Mittels des Brenners 41 wird ein Gemisch aus Luft und Brennstoff in der Brennkammer 40 verbrannt, wobei das entstehende Abgas über Abgasrohre 50 und 51, die sich jeweils seitlich der Brennkammer befinden, abgeführt wird (s. Fig. 4).

Wie sich aus Fig. 4 ergibt, sind die Abgasrohre 50 und 51 U-förmig ausgebildet und paarweise auf beiden Seiten der Brennkammer 40 parallel zueinander und leicht in Strömungsrichtung des Abgases fallend angeordnet, so dass bei dem gezeigten Ausführungsbeispiel insgesamt vier Abgasrohre 50, 51 vorgesehen sind. Die von der Brennkammer abgewandten Enden der Abgasrohre 50, 51 münden in einem Rauchgassammler 60, der in Fig. 3 zu sehen ist. An den Rauchgassammler 60 schließt sich ein Abgasauslass 32 an, welcher durch ein Hallendach 91 ins Freie geführt ist, so dass das Abgas letztendlich an die Außenumgebung der zu beheizenden Halle abgegeben wird. Wie bereits vorher erwähnt wird der erfindungsgemäße Warmlufterzeuger üblicherweise unterhalb der Hallendecke angeordnet.

Die Abgasrohre 50, 51 sowie der Rauchgassammler 60 und der Abgasauslass 32 können aus Edelstahl oder sonstigen hitzebeständigen und/oder korrosionsfesten Materialien gebildet sein, um bei Kondensatbildung dem aggressiven Medium widerstehen zu können.

Wie in Fig. 3 zu sehen ist, ist die Abgasanlage 30 mit dem Abgasauslass so ausgebildet, dass Abgasauslass 32 und Zulufteinlass 31, der an den Zuluftkanal 42 für den Brenner 41 angeschlossen ist, konzentrisch ausgebildet sind, so dass das Abgas mit seiner Restwärme die Frischluft 100 für den Brenner 41 vorwärmt, was zu einer weiteren Effizienzsteigerung beiträgt.

Durch das Gehäuse 70, welches um die Brennkammer 40 angeordnet ist, wird ein Heizluftkanal 113 ausgebildet, der die Brennkammer 40 umgibt. Der Heizluftkanal 113 kann sowohl oberhalb als auch unterhalb sowie seitlich der Brennkammer 40, und zwar sowohl beidseits als auch nur auf einer Seite, ausgebildet sein. Wie mit den Pfeilen in Fig. 3 angedeutet ist, wird durch das Gebläse oder den Ventilator 80, die in der Halle 90 befindliche Raumluft 110, Luft von außerhalb der Halle oder eine Mischung aus beidem angesaugt und in den Heizluftkanal 113 gepumpt, um dort an der Brennkammer 40 vorbeizuströmen, so dass die Wärme, die durch die Verbrennung in der Brennkammer 40 erzeugt wird, auf die vorbei strömende Luft 110 übertragen werden kann. Durch die zumindest teilweise Verwendung von Frischluft für die zu erwärmende Heizluft kann mit dem Warmlufterzeuger gleichzeitig auch eine Belüftung oder Frischluftzufuhr ermöglicht werden.

Die an der Brennkammer 40 vorbeigeströmte Heizluft wird dann weiter in einen Wärmetauscher geführt, der sich entlang der Abgasrohre 50, 51 erstreckt. Der Wärmetauscher umfasst hierbei eine rohrförmige Ummantelung 52, die sich an den gegenüberliegenden Seiten des Gehäuses 70 an dieses anschließt und jeweils die U-förmigen Abgasrohre 50, 51 umschließt. In der Fig. 4 ist die Ummantelung 52 weitgehend für eine bessere Darstellung von weiteren Komponenten weggelassen worden und lediglich Teilbereiche der Ummantelung am Gehäuse 70 und im Bereich eines Ausblaskopfes sind in der Fig. 4 gezeigt. Die zu erwärmende Heizluft wird innerhalb der Ummantelung 52 teilweise in Gegenstrom (im Bereich des auslassseitigen Schenkels der U-förmigen Abgasrohre) als auch im Gleichstrom (entlang der brennerseitigen Schenkel der U-förmigen Abgasrohre 50, 51) geführt. Durch den Transport der zu erwärmenden Heizluft entlang der U-förmigen Abgasrohre 50, 51 findet ein Wärmeübergang von der Wärme des Abgases auf die zu erwärmende Heizluft statt, so dass im Bereich der Wendepunkte der U-förmigen Abgasrohre 50, 51 Ausblasköpfe an der Ummantelung 52 vorgesehen sein können, die die erwärmte Heizluft in den zu beheizenden Raum 90 abgeben.

Wie sich aus der Schnittdarstellung der Fig. 3 sowie der perspektivischen Ansicht der Fig. 4 ergibt, ist der Heizluftkanal 113 im Bereich unterhalb der Brennkammer 40 in zwei Heizluftteilkanäle 115 und 114 unterteilt, die parallel zueinander entlang der Brennkammer 40 geführt sind. Die Unterteilung des Heizluftkanals 113 in die beiden Heizluftteilkanäle 114 und 115 erfolgt über ein Trennblech 112, welches unterhalb der Brennkammer 40 im Gehäuse 70 angeordnet ist.

An einem Ende ist das Trennblech 112 mit einem weiteren Trennblech 111 verbunden, welches sich in dem Gehäuse 70 von der Oberseite zur Unterseite zwischen der Brennkammer 40 und dem Rauchgassammler 60 erstreckt und weiterhin in die Ummantelung 52 hineinragt und dort zwischen dem brennkammerseitigen Ende der U-förmigen Abgasrohre 50, 51 und dem rauchgassammmlerseitigen Ende der U-förmigen Abgasrohre 50, 51 angeordnet ist, um dort ebenfalls Heizluftteilkanäle auszubilden. Der beabstandet von der Brennkammer 40 ausgebildete Heizluftteilkanal 114 ist über eine Öffnung 118 im Trennblech 111 mit dem Heizluftteilkanal verbunden, in welchem der Rauchgassammler 60 angeordnet ist. Auf diese Weise kann die von dem Gebläse oder Ventilator 80 kommende Luft beabstandet von der Brennkammer 40 über den Heizluftteilkanal 114 unmittelbar in den Endbereich der Abgasrohre 50, 51 geführt werden, um dort eine weitere Abkühlung des bereits abgekühlten Abgases zu ermöglichen. Somit ist es möglich, die Wärme, die das Abgas in diesem Bereich noch aufweist, ebenfalls zu nutzen und darüber hinaus auch die Kondensationswärme einzusetzen, die durch Kondensation des Abgases im Endbereich der U-förmigen Abgasrohre 50, 51 und im Rauchgassammler 60 erfolgt.

Am gebläseseitigen Ende des Trennblechs 112 ist eine schwenkbare Klappe 117 angeordnet, die mit einem Drehgelenk 116 gelagert ist. Damit kann die Menge der zu erwärmenden Heizluft, die in den Heizluftteilkanal 114 und in den Heizluftteilkanal 115 eingeführt wird, eingestellt werden. Die Klappe 117 kann insbesondere so ausgebildet sein, dass sie auch als Verschluss für einen oder beide Heizluftteilkanäle 114, 115 dient.

Die Klappe 117 kann so ausgebildet sein, dass sie mechanisch einstellbar ist, also eine vorgegebene Position je nach Betriebsweise des Heizsystems fest eingestellt wird. Andererseits ist es auch möglich, die Stellung der Klappe 117 thermisch zu regeln, also beispielsweise in Abhängigkeit der Abgastemperatur im Rauchgassammler 60 oder im Abgasauslass 32. Entsprechend können Temperatursensoren im Bereich der Abgasrohre 50, 51, des Rachgassammlers 60 oder des Abgasauslasses 32 vorgesehen sein, die ihre Messwerte an eine Steuerung und/oder Regelung übermitteln, so dass automatisiert die richtige Stellung der Klappe 117 eingestellt werden kann.

Um einen besseren Wärmeaustausch zwischen dem Abgas und der Heizluft zu ermöglichen, können sowohl im Heizluftkanal als auch in den Abgasrohren oder lediglich in einem von beiden entsprechende Wirbelelemente, wie Ablenkbleche, vorgesehen sein, die eine turbulente Strömung erzeugen.

Wie sich insbesondere aus der Fig. 4 ergibt, sind die Abgasrohre 50, 51 zur Horizontalen geneigt und in Strömungsrichtung des Abgases leicht fallend ausgebildet, so dass in den Abgasrohren 50, 51 entstehendes Kondensat in den Rauchgassammler 60 abfließen kann, welcher wiederum einen Abfluss 61 zur Abgabe des Kondensats aufweist. Im Rauchgassammler 60 sammelt sich auch das Kondensat, welches in dem Abgasauslass 32 entstehen kann. Der Auslass 61 kann mit einer entsprechenden Pumpeinrichtung zum Abpumpen des Kondensats und/oder einer Neutralisationsvorrichtung zur Neutralisierung des Kondensats ausgestattet sein.

Die erfindungsgemäße Vorrichtung ermöglicht eine Effizienzsteigerung eines direkt beheizten Warrolufterzeugers mit einer großräumigen Warmluftverteilung, indem die Abgastemperatur so weit abgesenkt werden kann, dass auch die Kondensationswärme mitgenutzt werden kann.

Obwohl die vorliegende Erfindung anhand des Ausführungsbeispiels detailliert beschrieben worden ist, ist für einen Fachmann selbstverständlich, dass die Erfindung nicht auf dieses Ausführungsbeispiel beschränkt ist, sondern dass vielmehr Abwandlungen in der Weise möglich sind, dass einzelne Merkmale weggelassen oder andersartige Kombinationen von Merkmalen verwirklicht werden können, solange der Schutzbereich der beigefügten Ansprüche nicht verlassen wird. Insbesondere beinhaltet die vorliegende Offenbarung sämtliche Kombinationen aller vorgestellten Merkmale.

## Patentansprüche

1. Direkt beheizter Warmlufterzeuger mit einer Brennkammer, in welcher Brennstoff zur Erzeugung von Wärme verbrannt werden kann, und mindestens einem Wärmetauscher, bei welchem Wärme von der Brennkammer (40) und von in der Brennkammer erzeugten Abgasen auf zur Heizung vorgesehene Luft übertragen wird, um warme Heizluft zu erzeugen, wobei der Wärmetauscher mindestens ein Abgasrohr (50, 51), welches in mindestens einer Raumrichtung eine größere Erstreckung aufweist als die größte Ausdehnung der Brennkammer, und mindestens einen Heizluftkanal (113) aufweist, der sich entlang der Brennkammer und dem Abgasrohr erstreckt und die zu erwärmende Heizluft an der Brennkammer und dem Abgasrohr zum Wärmeaustausch entlang führt,
wobei der Heizluftkanal in mindestens einem Teilbereich so unterteilt ist, dass Heizluftteilkanäle (114, 115) zur Führung von Heizluftanteilen unterschiedlicher Temperatur vorhanden sind, wobei der Heizluftkanal so ausgebildet ist, dass der Heizluftanteil mit niedrigerer Temperatur so geführt wird, dass er auf einen Endbereich des Abgasrohrs trifft, um insbesondere die Abgastemperatur unter die Kondensationstemperatur abzukühlen,
**dadurch gekennzeichnet, dass**
das mindestens eine Abgasrohr (50, 51) U-förmig geführt ist und eine Trennwand (111) zumindest teilweise zwischen den Schenkeln des U-förmigen Abgasrohrs (50, 51) zur Bildung von Heizluftteilkanälen angeordnet ist.

2. Warmlufterzeuger nach Anspruch 1,
**dadurch gekennzeichnet, dass**
der Heizluftkanal im Bereich der Brennkammer (40) unterteilt ist, so dass mindestens ein erster Heizluftteilkanal (115) für einen ersten Heizluftanteil direkt an der Brennkammer vorbei geführt wird und mindestens ein zweiter Heizluftteilkanal (114) für einen zweiten Heizluftanteil beabstandet von der Brennkammer geführt wird.

3. Warmlufterzeuger nach Anspruch 1 oder 2,
**dadurch gekennzeichnet, dass**
der Heizluftkanal so ausgebildet ist, dass der zweite Heizluftteilkanal (114) direkt in einen Bereich (118) des Heizluftkanals am Ende des Abgasrohrs mündet.

4. Warmlufterzeuger nach einem der vorhergehenden Ansprüche,
**dadurch gekennzeichnet, dass**
der Warmlufterzeuger eine insbesondere mechanisch einstellbare und/oder thermisch geregelte Verschluss- und/oder Verstelleinrichtung (116, 117) zur Aufteilung der Heizluftanteile in den Heizluftteilkanälen umfasst.

5. Warmlufterzeuger nach einem der vorhergehenden Ansprüche,
**dadurch gekennzeichnet, dass**
die Heizluftteilkanäle (114, 115) parallel zueinander und/oder zum Heizluftkanal ausgebildet sind.

6. Warmlufterzeuger nach einem der vorhergehenden Ansprüche,
**dadurch gekennzeichnet, dass**
mehrere Abgasrohre (50, 51) parallel zueinander und/oder an gegenüberliegenden Seiten der Brennkammer angeordnet sind.

7. Warmlufterzeuger nach einem der vorhergehenden Ansprüche,
**dadurch gekennzeichnet, dass**
das Abgasrohr (50, 51) zur Horizontalen geneigt, insbesondere in Strömungsrichtung des Abgases leicht fallend ausgebildet ist, um einen Ablauf von Kondensat zu ermöglichen.

8. Warmlufterzeuger nach einem der vorhergehenden Ansprüche,
**dadurch gekennzeichnet, dass**
mehrere Abgasrohre (50, 51) in einen Rauchgassammler (60) münden, der benachbart der Brennkammer angeordnet ist.

9. Warmlufterzeuger nach Anspruch 8,
**dadurch gekennzeichnet, dass**
eine Trennwand (111) zwischen Rauchgassammler (60) und Brennkammer (40) zur Bildung von Heizluftteilkanälen angeordnet ist.

10. Warmlufterzeuger nach Anspruch 2 und 9,
**dadurch gekennzeichnet, dass** der Heizluftteilkanal, in welchem der Rauchgassammler (60) und das eine Ende des Abgasrohrs (50, 51) angeordnet sind, mit dem zweiten Heizluftteilkanal (114), der beabstandet und entfernt von der Brennkammer an dieser vorbei geführt wird, verbunden ist.

11. Warmlufterzeuger nach einem der vorhergehenden Ansprüche,
**dadurch gekennzeichnet, dass**
die Brennkammer einen Zuluftkanal (42) aufweist, der zum Wärmeaustausch benachbart, insbesondere konzentrisch zu einem Abgasauslass (32) angeordnet ist.

12. Warmlufterzeuger nach einem der vorhergehenden Ansprüche,
**dadurch gekennzeichnet, dass**
der Warmlufterzeuger einen Kondensatablauf (61) aufweist.

## Claims

1. A directly heated air heater comprising a combustion chamber for burning fuel to generate heat, and at least one heat exchanger in which heat is transferred from the combustion chamber (40) and from exhaust gases generated in the combustion chamber to air which is provided for the purpose of being heated in order that hot air may be generated, wherein the heat exchanger comprises at least one exhaust pipe (50, 51) having a greater extension in at least one spatial direction than the greatest extension of the combustion chamber, and at least one hot air channel (113), which extends along the combustion chamber and the exhaust pipe and guides the hot air that is to be heated along the combustion chamber and the exhaust pipe for heat exchange, wherein at least one sub-region of the hot air channel is subdivided such that hot air sub-channels (114, 115) are provided for guiding hot air portions of different temperature, wherein the hot air channel is designed in such a way that the hot air portion of lower temperature is guided such that it meets an end region of the exhaust pipe, especially in order to cool the exhaust gas temperature to below the condensation temperature,
**characterised in that**
the at least one exhaust pipe (50, 51) is guided in a U-shaped manner and a partition wall (111) is disposed at least partially between the limbs of the U-shaped exhaust pipe (50, 51) for the purpose of forming hot air sub-channels.

2. Air heater according to claim 1,
**characterised in that**
the hot air channel in the region of the combustion chamber (40) is sub-divided such that at least a first hot air sub-channel (115) for a first hot air portion is guided directly past the combustion chamber and at least a second hot air sub-channel (114) for a second hot air portion is guided at a distance from the combustion chamber.

3. Air heater according to claim 1 or 2,
**characterised in that**
the hot air channel is configured such that the second hot air sub-channel (114) opens directly into a region (118) of the hot air channel at the end of the exhaust pipe.

4. Air heater according to any of the preceding claims,
**characterised in that**
the air heater comprises a closure and/or adjustment device (116, 117), which is in particular mechanically adjustable and/or thermally controlled, for the purpose of dividing the hot air portions in the hot air sub-channels.

5. Air heater according to any of the preceding claims,
**characterised in that**
the hot air sub-channels (114, 115) are configured parallel with one another and/or the hot air channel.

6. Air heater according to any of the preceding claims,
**characterised in that**
a plurality of exhaust pipes (50, 51) are disposed parallel to one another and/or on opposite sides of the combustion chamber.

7. Air heater according to any of the preceding claims,
**characterised in that**
the exhaust pipe (50, 51) is inclined with respect to the horizontal, in particular is formed so as to fall slightly in the direction of the flow of exhaust gas, in order to enable condensate to drain away.

8. Air heater according to any of the preceding claims,
**characterised in that**
a plurality of exhaust pipes (50, 51) open into a flue gas collector (60) which is disposed adjacent to the combustion chamber.

9. Air heater according to claim 8,
**characterised in that**
a partition wall (111) is disposed between flue gas collector (60) and combustion chamber (40) for the purpose of forming hot air sub-channels.

10. Air heater according to claim 2 und 9,
**characterised in that**
the hot air sub-channel in which the flue gas collector (60) and the one end of the exhaust pipe (50, 51) are disposed is connected to the second hot air sub-channel (114), which is guided past the combustion chamber at a distance therefrom.

11. Air heater according to any of the preceding claims,
**characterised in that**
the combustion chamber has a supply air channel (42) which is disposed adjacent to, in particular concentrically with an exhaust gas outlet (32), for the purpose of heat exchange.

12. Air heater according to any of the preceding claims,
**characterised in that**
the air heater has a condensate outlet (61).

## Revendications

1. Générateur d'air chaud chauffé directement avec une chambre de combustion, dans laquelle du combustible peut être brûlé pour la génération de chaleur, et au moins un échangeur de chaleur, pour lequel de la chaleur est transmise de la chambre de combustion (40) et des gaz d'échappement générés dans la chambre de combustion à l'air prévu pour le chauffage, afin de générer de l'air de chauffage chaud, dans lequel l'échangeur de chaleur présente au moins un tube de gaz d'échappement (50, 51) qui présente dans au moins un sens spatial une étendue plus grande que l'étendue la plus grande de la chambre de combustion, et au moins un canal d'air de chauffage (113) qui s'étend le long de la chambre de combustion et du tube de gaz d'échappement et mène l'air de chauffage à chauffer le long de la chambre de combustion et le tube de gaz d'échappement pour l'échange de chaleur,
dans lequel le canal d'air de chauffage est divisé dans au moins une zone partielle de sorte que des canaux partiels d'air de chauffage (114, 115) soient présents pour le guidage de parts d'air de chauffage de différente température, dans lequel le canal d'air de chauffage est réalisé de sorte que la part d'air de chauffage soit guidée à plus faible température de sorte qu'elle rencontre une zone d'extrémité du tube de gaz d'échappement afin de refroidir en particulier la température de gaz d'échappement sous la température de condensation,
**caractérisé en ce que**
l'au moins un tube de gaz d'échappement (50, 51) est guidé en forme de U et une paroi de séparation (111) est agencée au moins partiellement entre les branches du tube de gaz d'échappement (50, 51) en forme de U pour la formation de canaux partiels d'air de chauffage.

2. Générateur d'air chaud selon la revendication 1,
**caractérisé en ce que**
le canal d'air chaud est divisé dans la zone de la chambre de combustion (40) de sorte qu'au moins un premier canal partiel d'air de chauffage (115) soit guidé pour une première part d'air de chauffage directement devant la chambre de combustion et au moins un second canal partiel d'air de chauffage (114) soit guidé pour une seconde part d'air de chauffage à distance de la chambre de combustion.

3. Générateur d'air chaud selon la revendication 1 ou 2,
**caractérisé en ce que**
le canal d'air de chauffage est réalisé de sorte que le second canal partiel d'air de chauffage (114) débouche directement dans une zone (118) du canal d'air de chauffage à l'extrémité du tube de gaz d'échappement.

4. Générateur d'air chaud selon l'une quelconque des revendications précédentes,
**caractérisé en ce que**
le générateur d'air chaud comprend un dispositif de fermeture et/ou de réglage (116, 117) réglable en particulier mécaniquement et/ou réglé thermiquement pour la répartition des parts d'air de chauffage dans les canaux partiels d'air de chauffage.

5. Générateur d'air chaud selon l'une quelconque des revendications précédentes,
**caractérisé en ce que**
les canaux partiels d'air de chauffage (114, 115) sont réalisés parallèlement l'un à l'autre et/ou au canal d'air de chauffage.

6. Générateur d'air chaud selon l'une quelconque des revendications précédentes,
**caractérisé en ce que**
plusieurs tubes de gaz d'échappement (50, 51) sont agencés parallèlement l'un à l'autre et/ou sur des côtés opposés de la chambre de combustion.

7. Générateur d'air chaud selon l'une quelconque des revendications précédentes,
**caractérisé en ce que**
le tube de gaz d'échappement (50, 51) est réalisé incliné par rapport à l'horizontale, tombant légèrement en particulier dans le sens d'écoulement du gaz d'échappement afin de permettre une évacuation de condensat.

8. Générateur d'air chaud selon l'une quelconque des revendications précédentes,
**caractérisé en ce que**
plusieurs tubes de gaz d'échappement (50, 5 1) débouchent dans un collecteur de gaz de fumée (60) qui est agencé de manière contiguë à la chambre de combustion.

9. Générateur d'air chaud selon la revendication 8,
**caractérisé en ce que**
une paroi de séparation (111) est agencée entre le collecteur de gaz de fumée (60) et la chambre de combustion (40) pour la formation de canaux partiels d'air de chauffage.

10. Générateur d'air chaud selon les revendications 2 et 9,
**caractérisé en ce que**
le canal partiel d'air de chauffage dans lequel le collecteur de gaz de fumée (60) et l'une extrémité du tube de gaz d'échappement (50, 51) sont agencés, est relié au second canal partiel d'air de chauffage (114) qui est guidé à distance et loin de la chambre de combustion devant celle-ci.

11. Générateur d'air chaud selon l'une quelconque des revendications précédentes,
**caractérisé en ce que**
la chambre de combustion présente un canal d'amenée d'air (42) qui est agencé de manière contiguë pour l'échange de chaleur, en particulier concentriquement à une sortie de gaz d'échappement (32).

12. Générateur d'air chaud selon l'une quelconque des revendications précédentes,
**caractérisé en ce que**
le générateur d'air chaud présente une évacuation de condensat (61).
